**Europäisches Patentamt**

**European Patent Office**

**Office européen des brevets**

(19)

(11) Veröffentlichungsnummer : **0 005 797**
**B1**

(12) **EUROPÄISCHE PATENTSCHRIFT**

(45) Veröffentlichungstag der Patentschrift :
17.06.81

(21) Anmeldenummer : 79101588.6

(22) Anmeldetag : 23.05.79

(51) Int. Cl.³ : **B 01 D 46/02,** F 16 L 37/02,
F 16 L 37/20

(54) **Halterung für Filterschläuche in Feinstaubfiltern.**

(30) Priorität : 26.05.78 DE 2823107

(43) Veröffentlichungstag der Anmeldung :
12.12.79 (Patentblatt 79/25)

(45) Bekanntmachung des Hinweises auf die Patenterteilung : 17.06.81 Patentblatt 81/24

(84) Benannte Vertragsstaaten :
BE CH FR GB IT LU NL

(56) Entgegenhaltungen :
CH - A - 116 203
CH - A - 141 957
DE - A - 1 918 265
DE - C - 50 973
DE - C - 1 000 195
US - A - 2 769 506

(73) Patentinhaber : PERGANDE Gesellschaft für Industrielle Entstaubungstechnik mbH
Mucher Strasse 8
D-5000 Köln 91 (DE)

(72) Erfinder : Pergande, Wilfried
Mucher Strasse 8
D-5000 Köln 91 (DE)

(74) Vertreter : Patentanwälte Dipl.-Ing. W.Dahlke
Dipl.-Ing. H.-J. Lippert
Frankenforster Strasse 137
D-5060 Bergisch Gladbach 3 (DE)

Imprimerie Jouve, 17, rue du Louvre, 75001 Paris, France

Halterung für Filterschläuche in Feinstaubfiltern

Die Erfindung betrifft eine Halterung für Filterschläuche in Feinstaubfiltern, die aus einem Stützkorb für den Filterschlauch, einer Venturidüse und einer Einspannung für den auswechselbar eingesetzten Filterschlauch besteht.

Bei den bekannten Halterungen dieser Art wird der aus einem Gewebe oder dergleichen bestehende, unten geschlossene zylindrische Schlauch von unten über den Stützkorb geschoben und an dessen oberem Ring mittels einer Schelle befestigt. Das Auswechseln zugesetzter Filterschläuche in Filtern dieser Art ist einerseits zeitraubend und ist andererseits eine sehr schmutzige Arbeit, da man gezwungen ist, zum Lösen der Schellen in die Staubkammer, die eine Vielzahl solcher Filterschläuche aufnimmt, einzusteigen. Der Erfindung liegt die Aufgabe zugrunde, eine Halterung zu schaffen, die zum Auswechseln der zugesetzten Filterschläuche nicht das Einsteigen einer Person in die Staubkammer verlangt, sondern die Bedienung von der Oberseite der Kopfplatte dieser Staubkammer aus in einfacher und schneller Weise ermöglicht.

Diese Aufgabe wird dadurch gelöst, daß die Einspannung einen zwischen Venturidüse und Stützkorb befindlichen Zwischenring mit leicht konischem Außenmantel zum Aufschieben des oberen Randes eines Filterschlauches unter entsprechender Aufweitung und einen oberseitig auf der Kopfplatte des Feinstaubfilters befestigten und die Öffnung zur Aufnahme des Stützkorbes mit Filterschlauch umgebenden Haltekonus mit einer konischen inneren Mantelfläche, die dem Außenkonus des Zwischenringes entspricht, umfaßt.

Zum Einsetzen eines Filterschlauches wird dieser bei herausgenommenem Stützkorb zunächst von unten her über diesen hinweggeschoben und unter Aufweitung seines oberen Endes bis über den leicht konischen Außenmantel des Zwischenringes geschoben. Im allgemeinen haftet der Filterschlauch dann bereits infolge seiner Aufweitung an dem Konus. Gegebenenfalls wird er noch während des Einbringens von Hand festgehalten. Dann wird der Stützkorb mit dem übergeschobenen Filterschlauch in den Haltekonus auf der Kopfplatte von oben her eingesetzt und soweit nach unten bewegt, bis sein oberes, aufgeweitetes Ende von dem Haltekonus berührt und schließlich fest an den inneren Konus des Zwischenringes angepreßt wird. Der Filterschlauch wird nun fest und unter zuverlässiger Abdichtung zwischen Haltekonus und Zwischenring gehalten und kann nicht nach unten abfallen.

Sobald der Filterschlauch dann zugesetzt ist und ausgewechselt werden soll, wird der an der Venturidüse sitzende Zwischenring mit dem daran hängenden Stützkorb nach oben aus dem Haltekonus herausgezogen. Durch das vorherige feste Anpressen bleibt der Filterschlauch zunächst in dem Haltekonus hängen. Es genügt aber eine leichte Schüttelbewegung oder ein Anstoßen, um den Filterschlauch zum Abfallen zu bringen. Der Filterschlauch fällt dann nach unten in den trichterförmigen Abschluß der Staubkammer und kann aus dieser entfernt werden. Sodann wird ein neuer Filterschlauch aufgeschoben und der Stützkorb mit Zwischenring und Venturidüse wieder eingeschoben.

Die erfindungsgemäße Ausbildung der Halterung ermöglicht ein schnelles Auswechseln eines Filterschlauches, das im allgemeinen nur etwa 30 sec. gegenüber früher etwa 5 min. benötigt. Die Arbeit des Auswechselns ist zudem noch sehr sauber, da sie von der Oberseite der Kopfplatte her, also von der Reinluftkammer her, vorgenommen werden kann.

Vorzugsweise wird vorgeschlagen, daß der Außenkonus des Zwischenringes und der ihm entsprechende Haltekonus einen Winkel von 5° mit der Mittelachse bilden. Bei einem solchen Konuswinkel läßt sich das obere Ende des Filterschlauches noch leicht aufweiten und es wird andererseits eine sichere Pressung und Selbsthaltung garantiert.

Im allgemeinen arbeitet eine solche Halterung ohne weitere Befestigungen. In Sonderfällen ist aber zusätzlich vorgesehen, einstellbare Spannschlösser am Zwischenring anzuordnen, die diesen lösbar in den Haltekonus einpressen.

Besonders bei sehr glatten Oberflächen ist die Anordnung solcher Spannschlösser mit Bügelverschlüssen sehr vorteilhaft.

Die erfindungsgemäße Halterung kann für Filter jeder Art verwendet werden, sofern diese auswechselbare Filterschläuche aufweisen, die auf einen Stützkorb aufgezogen und zusammen mit diesem in eine Staubkammer eingeschoben werden.

Die Erfindung wird nachstehend in einem Ausführungsbeispiel anhand der Zeichnung näher erläutert. Dabei zeigen:

Fig. 1 eine teilweise aufgebrochene Seitenansicht eines Feinstaubfilters mit einer erfindungsgemäßen Halterung bei jedem einzelnen Filterschlauch und

Fig. 2 in vergrößertem Maßstab eine Darstellung des oberen Endes des Stützkorbes mit Zwischenring und Venturidüse, in den Haltekonus auf der Kopfplatte eingesetzt, und zwar links in Ansicht ohne Filterschlauch und rechts im Schnitt mit Filterschlauch.

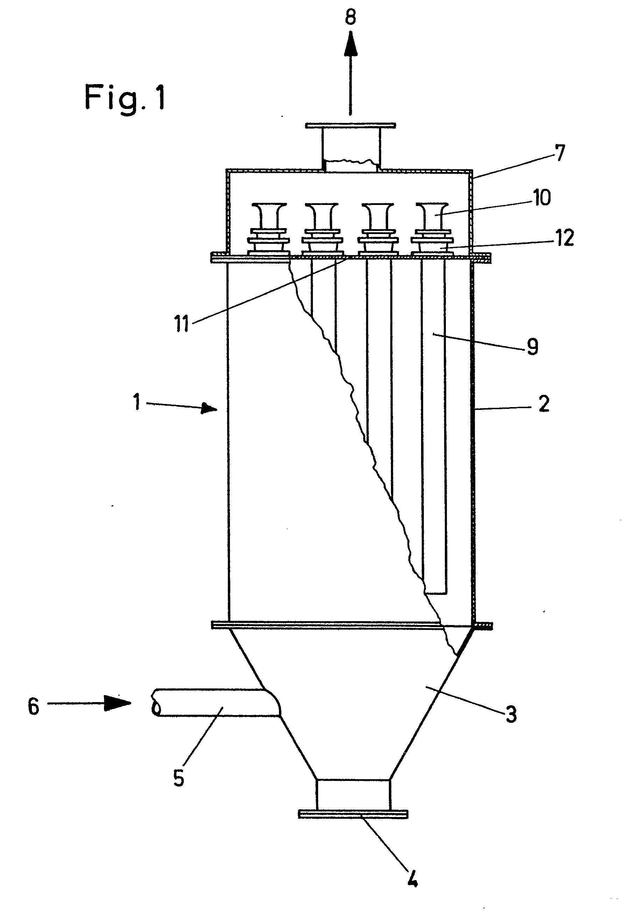

Die in Fig. 1 dargestellte Staubkammer 1 ist unterseitig durch einen Trichter 3 abgeschlossen, dem in Richtung des Pfeiles 6 über ein seitlich einmündendes Rohr 5 die zu reinigende Luft zugeführt wird. Unterseitig ist der Trichter 3 durch eine Bodenplatte 4 verschlossen, die zum Entfernen des angesammelten Staubes geöffnet werden kann. In der Praxis verwendet man dort auch besondere Austragsorgane, beispielsweise eine Zellenradschleuse, eine Förderschnecke oder dergleichen, die aber hier der Einfachheit halber nicht dargestellt sind, da sich die Erfindung nicht darauf erstreckt.

Die Staubkammer 1 ist oberseitig durch eine Kopfplatte 11 abgeschlossen, die sich zwischen dem oberen Flansch des Mantels 2 der Staubkammer einerseits und dem unteren Flansch der aufgesetzten Reinluftkammer befindet, wobei in bekannter Weise Dichtungsringe zwischengelegt sind.

Die gereinigte Luft verläßt die Reinluftkammer 7 in Richtung des Pfeiles 8.

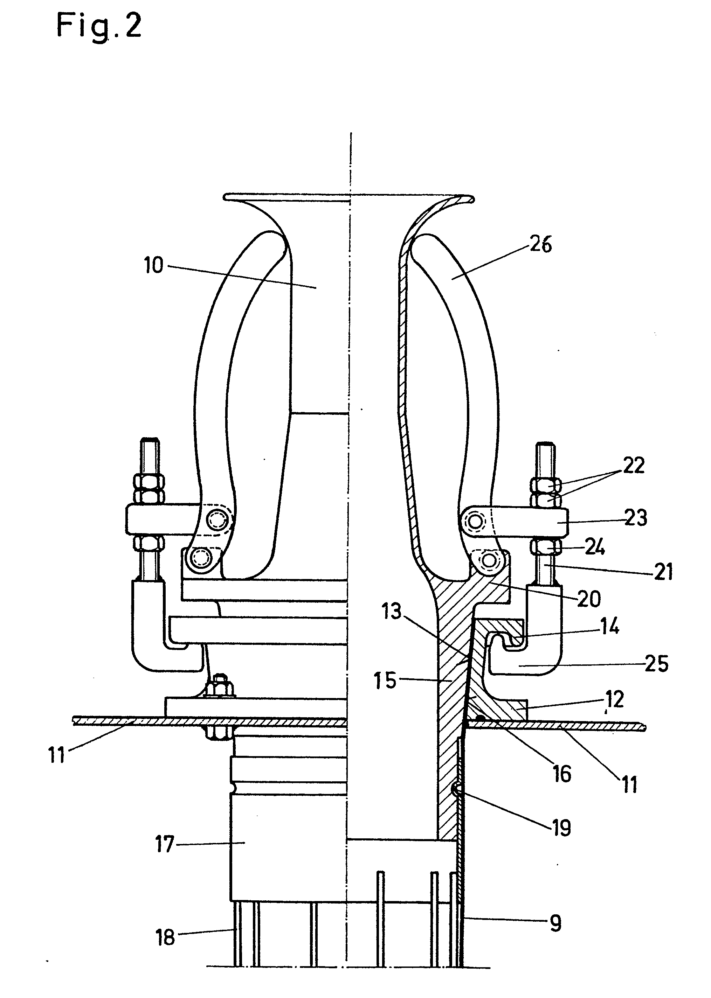

Zur Reinigung der zugeführten Luft sind in die Kopfplatte 11 Diffusoren oder Venturidüsen 10 eingesetzt, die unterseitig, wie man Fig. 2 entnehmen kann, einstückig in Zwischenringe 15 übergehen, an denen wiederum unterseitig ein Haltering 17 für einen aus vertikal verlaufenden Stäben gebildeten Stützkorb 18 hängt.

Der Zwischenring 15 hat einen leicht konischen Außenmantel 16 und sitzt in dem entsprechend ausgebildeten Haltekonus 12 mit konischer Innenwand 13, der jeweils auf die Kopfplatte 11 aufgesetzt und mit dieser dicht verbunden ist und der eine Öffnung in dieser Kopfplatte umgibt.

Der Haltering 17 ist bei 19 in eine entsprechende Außennut des unteren Endes des Zwischenringes 15 eingesickt. Bei der in Fig. 2 dargestellten Ausführung sind ferner zwei Spannschlösser beiderseits der Venturidüse 10 vorgesehen, die in Fig. 1 der Einfachheit halber fortgelassen wurden. Diese Spannschlösser umfassen jeweils eine Kralle 25, die unter den abgebogenen Rand des Haltekonus 12 greift und über einen Gewindelbolzen 21 mit einer Zuglasche 23 verbunden ist, die an einen Hebel 26, oberhalb seiner Anlenkung an ein seitlich vom Zwischenring vorstehendes Auge 20 angelenkt ist. Der Bolzen 21 wird durch Muttern 22 und 24 fest mit der Zuglasche 23 verbunden.

Das Lösen der Spannschlösser erfolgt wie üblich einfach durch Abwärtsschwenken der Hebel 26, wodurch sich die Kralle 25 vom äußeren, abwärts gerichteten Rand 14 des Haltekonus' 12 löst und ein Herausheben des Zwischenringes 15 aus dem Haltekonus 12 ermöglicht.

Die Anordnung dieser Spannschlösser bringt außer der erhöhten Sicherheit gegen ungewolltes Lösen auch noch den Vorteil mit sich, daß beim Öffnen der Spannschlösser die Krallen 25 unterseitig auf den Flansch des Haltekonus' 12 stoßen und den Zwischenring 15 aus diesem Haltekonus herausheben, so daß dafür keinerlei Anstrengung benötigt wird.

## Ansprüche

1. Halterung für Filterschläuche in Feinstaubfiltern, bestehend aus einem Stützkorb (17, 18) für den Filterschlauch, einer Venturidüse (10) und einer Einspannung für den auswechselbar eingesetzten Filterschlauch (9), dadurch gekennzeichnet, daß die Einspannung einen zwischen Venturidüse (10) und Stützkorb (17,18) befindlichen Zwischenring (15) mit leicht konischem Außenmantel (16) zum Aufschieben des oberen Randes eines Filterschlauches (9) unter entsprechender Aufweitung und einen oberseitig auf der Kopfplatte (11) des Feinstaubfilters (1) befestigten und die Öffnung zur Aufnahme des Stützkorbes mit Filterschlauch umgebenden Haltekonus (12) mit einer konischen inneren Mantelfläche (13), die dem Außenkonus des Zwischenringes entspricht, umfaßt.

2. Halterung nach anspruch 1, dadurch gekennzeichnet, daß die beiden Konen einen Winkel von 5° mit der Mittelachse bilden.

3. Halterung nach anspruch 1 und 2, gekennzeichnet durch einstellbare Spannschlösser (21 bis 26) am Zwischenring (15), die diesen lösbar in den Haltekonus (12) einpressen.

## Claims

1. Retaining means for filter hoses in fine dust filters, comprising a support basket (17, 18) for the filter hose, a venturi jet (10) and a claimping device for the exchangeably inserted filter hose (9), characterised in that said clamping device includes an intermediate ring (15) disposed between said venturi jet (10) and said support basket (17, 18) and having a slightly tapered outer periphery (16) for pushing on the upper rim of a filter hose (9) in accordingly expanding it and a retaining cone (12) secured at the to side of a head plate (11) of said fine dust filter (1) and surrounding the opening for receiving the support basket with the filter hose, said retaining cone (12) having a tapered inner peripheral surface (13) corresponding to the outer taper of the intermediate ring.

2. Retaining means of claim 1, wherein the two tapers define an angle of 5 degree relative to the central axis.

3. Retaining means of claims 1 and 2, wherein there are provided adjustable spanners (21 to 26) at the intermediate ring (15) releasably urging same into the retaining cone (12).

## Revendications

1. Support pour tuyaux de filtration dans des filtres à poussière fine, se composant d'un panier de soutien 17, 18 pour le tuyau de filtration d'une buse a venturi 10 et d'un dispositif de serrage pour le tuyau de filtration 9 qui est monté de manière interchangeable caractérisé en ce que le dispositif de serrage comporte un anneau intermédiaire 15 se trouvant entre la buse a venturi 10 et le panier de soutien 17, 18 et présentant une enveloppe extérieure 16 légèrement conique, pour pousser le bord supérieur d'un tuyau de filtration 9 sous l'évasement correspondant et un cône d'arrêt 12 fixé du côté supérieur sur la plaque de tête 11 du filtre à poussière fine et entourant l'ouverture pour la réception du panier de soutien avec le tuyau de filtration, ce cône d'arrêt 12 présentant une surface interne d'enveloppe conique 13 qui correspond au cône extérieur de l'anneau intermédiaire.

2. Support selon la revendication 1, caractérisé en ce que les deux cônes forment un angle de 5 degrés avec l'axe médian.

3. Support selon les revendications 1 ou 2, caractérisé par des manchons ou écrous de serrage réglables 21 à 26 sur l'anneau intermédiaire 15 qui serrent celui-ci de manière amovible dans le cône d'arrêt 12.

Fig.1

Fig.2